# EUROPEAN PATENT APPLICATION

(11) **EP 1 227 415 A2**
(43) Date of publication of application: **31.07.2002**
(21) Application number: 02250278.5
(22) Date of filing: 16.01.2002
(51) Int. Cl.: G06F 17/30

(54) **Information processing system**

(30) Priority: 29.01.2001 JP 2001020461
(71) Applicant: Sony Computer Entertainment Inc., Tokyo 107-0052 (JP)
(72) Inventor: Kaminagayoshi, Takehiro, Minato-ku, Tokyo 107-0052 (JP)
(74) Representative: DeVile, Jonathan Mark, Dr.

(57) **Abstract**

In a net communication system, a system server device brings a user of a pet whose taste and/or character corresponds with the taste and/or character of another user automatically, in such a way that a pet that becomes a double of one's own is made to pasture at a pet ranch formed within the system server device when he/she feels like pasturing. For this reason, it is possible to establish communications to the other user while making a search for the other user without a need of performing a troublesome labor intensive search.

## Description

### BACKGROUND OF THE INVENTION

### 1. Field of the Invention

The present invention relates to an information processing equipment, a method of information processing, a computer-readable recording medium having recorded therein an information processing program, an information processing program, a net communication system, a method of net communication, a computer-readable recording medium having recorded therein a net communication program, and a net communication program, for providing a new spot for communication.

### 2. Description of the Related Art

According to advanced computer device and advanced communication technology in these days, it is possible to establish communications readily while making a search for persons who have the same taste and/or character as that of one' own, via, for example, a bulletin board of the internet, a mailing list and so forth that can handle congenial topic and/or taste.

Such style of communications makes it possible to execute communications that go beyond workplace or community, and it brings spread to the life of persons, thus, it contributes to improvement of quality of life.

However, in order to make a search for persons who have the same taste and/or character as that of one' own, through the conventional bulletin board of the internet, the mailing list and so forth, it was necessary to wait for access from another person while retrieving the bulletin board and/or the mailing list with one's own address posted, or it was necessary to establish communications while making a search for persons who are compatible with one's own from among persons placed on the bulletin board and/or the mailing list to access to the person. For that reason, there was the problem that it takes a lot of trouble for selecting the person who has the same taste and/or character as that of one' own at one's own risk.

Also, conventionally, in order to establish communications, active will of establishing communications is required, however, if it is possible to make casually a search for congenial associate and so forth as though it were a game, it is very interesting, also, it may be said that it is preferable for busy modern people.

### SUMMARY OF THE INVENTION

Various aspects and features of the present invention are defined in the amended claims.

The present invention has been made inconsideration of the above-mentioned problem. Embodiments of the present invention can provide an information processing equipment, a method of information processing, a computer-readable recording medium having recorded therein an information processing program, on information processing program, a net communication system, a method of net communication, a computer-readable recoding medium having recorded therein a net communication program, and a net communication program, all of which are capable of establishing communications while making a search for congenial associate and so forth automatically and casually.

In the present invention, a terminal device of a user forms an object corresponding to character or taste, or character and taste of the user on the basis of user's information such as, for example, sentence information of an electronic mail and so forth and required image, or music information and so forth, and transmits the object along with the user's information to an information processing equipment on predetermined network.

The information processing equipment detects the object whose character or taste are identical with each other, or whose character and taste are similar to each other in such a way that both the objects transmitted from respective terminal devices and the user's information of respective users transmitted while being added to the objects are subjected to collating processing differently, then the objects whose information of the user are identical with each other, or whose information of the user are close to each other are detected. Further, the information concerning result of collating is transmitted differently to the terminal devices of respective users of the object thus extracted via the above-described network.

For that reason, the user can make a search for the other user whose character and/or taste are compatible with one's own, automatically, by only transmitting the object which becomes one's own double to the information processing equipment, and establish communications casually to the other user.

Other and further objects and features of the present invention will become obvious upon understanding of the illustrative embodiments about to be described in connection with the accompanying drawings or will be indicated in the appended claims, and various advantages not referred to herein will occur to one skilled in the art upon employing of the invention in practice.

### BRIEF DESCRIPTION OF THE DRAWINGS

The invention will now be described by way of example with reference to the accompanying drawings, throughout which like parts are referred to by like references, and in which:
FIG. 1 is a view showing system configuration of a net communication system according to an embodiment to which the present invention is applied;
FIGS. 2A, 2B, 2C and 2D are views showing examples of pets whose shapes are changed depending on contents of an electronic mail;
FIG. 3 is a view for explaining flow until the pet is formed depending on the contents of the electronic mail;
FIG. 4 is a functional block diagram of a part for forming a pet depending on the contents of the electronic mail and a part for forming a diary in an entertainment device that makes up the net communication system;
FIGS. 5A, 5B and 5C are views for explaining extracting processing of strings and collating processing of extracted strings that an entertainment device performs in order to determine shape and character of a pet;
FIGS. 6A and 6B are views showing examples of the strings that become collating object of the collating processing being performed in the entertainment device;
FIG. 7 is a schematic view of a pet ranch that is formed virtually within a system server device of the net communication system;
FIG. 8 is a view for explaining a first contact reporting mail that is transmitted respectively to the user of each pet that is subjected to matching processing by the system server device;
FIG. 9 is a view showing the number of medals which are acquired in such a way that respective fellow users perform game, quiz, and so forth through each other' s pets, and one example of item (service) that is brought to the user depending on the number of medal; and
FIG. 10 a view showing one example of a dairy that is formed at the entertainment device on the basis of information that each pet has brought back from pasturage.

### DETAILED DESCRIPTION OF THE PREFERRED EMBODIMENTS

Various embodiments of the present invention will be described with reference to the accompanying drawings. It is to be noted that the same or similar reference numerals are applied to the same or similar parts and elements throughout the drawings, and the description of the same or similar parts and elements will be omitted or simplified.

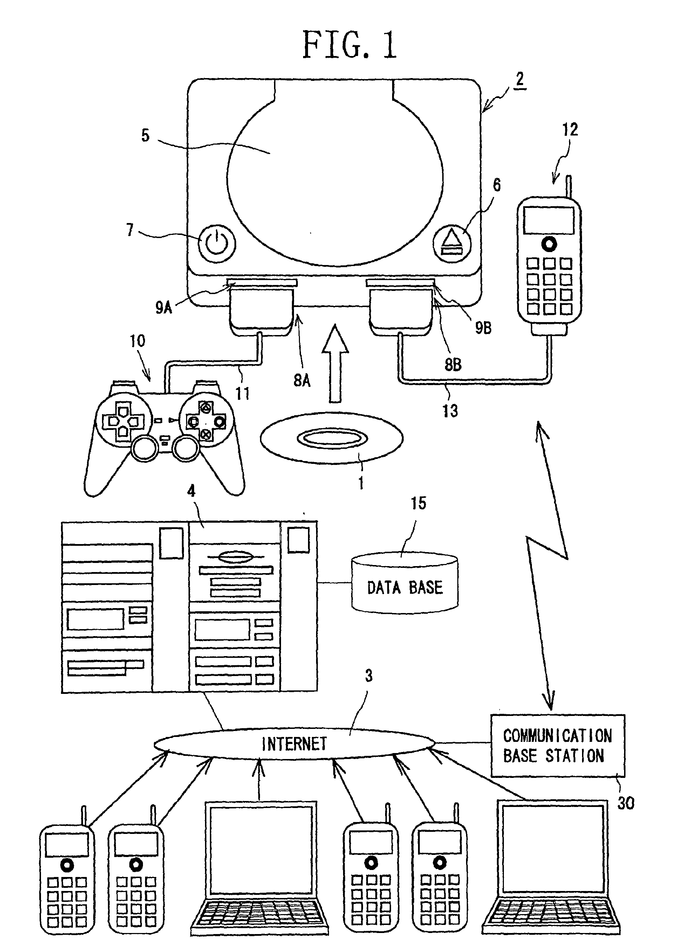

The present invention is applicable to the net communication system shown in FIG. 1.

### Outline of net communication system

In the first example, in this net communication system, character (pet) that becomes user's own double is formed on the basis of sentence information such as an electronic mail, a text data and so forth on the user side, then the pet is released (pasture) at virtual area (pet ranch) that is formed within a system server device, as one's own double.

Each pet pastured in the pet ranch possesses information that indicates each user' taste or character, then makes a search for a pet of the other user whose taste or character correspond with one's own taste or character respectively on the basis of the information, and then the pet of one's own brings back with a letter from the other user's pet searched previously to report existing of the pet of the other user whose taste or character correspond with one' s own taste or character respectively. The user who received the report pastures the pet of one's own at the pet ranch again to thereby access to the other user through the other user's pet. According to this operation, the user and the other user can establish communications indirectly via each other's pets.

### Configuration of net communication system

The net communication system has an entertainment device 2 for executing operation that a character (pet) corresponding to this net communication system is formed on the basis of a net communication program having recorded in an optical disk 1 which is one of recording medium such as a CD-ROM, a DVD-ROM, or a semiconductor memory or so forth, and a system server device 4 connected to communication network such as an internet 3 and wherein the pet ranch is formed in its virtual area.

### Configuration of entertainment device

The entertainment device 2 has a top cover 5 opened and closed when the optical disk 1 is placed on the device 2, an open button 6 for a open/close operation of the top cover 5, an (on/standby) /reset button 7 for designating reset and so forth of operation, two controller connecting terminals 8A, 8B, and two memory card entries 9A, 9B for inserting memory card.

Also, at back side (not shown) of the entertainment device 2, a power switch, an audio and video output terminal (AV multi output terminal) connected to a television receiver for a monitor and so forth, a PC card slot, an optical digital output terminal, an AC power input terminal and so forth are provided.

The entertainment device 2 which has an executing function of a video game as one of a plurality of functions, executes generally a video game by operation on the basis of a game program having recorded in the recording medium such as CD-ROM, DVD-ROM and so forth.

For that reason, a controller 10 provided with a plurality of operating buttons is generally connected to controller connecting terminals 8A, 8B via a controller cable 11, however, in this net communication system, the character (pet) which becomes user's own double is formed on the basis of the sentence information such as the electronic mail, the text data and so forth, then the pet is pastured at virtual area (pet ranch) that is formed within the system server device 4. Therefore, a cellular phone 12 (or PHS telephone) for executing communications with the system server device 4 on the internet 3 and for executing transmission and/or reception to/from a mail server device of a provider (not shown) of the user, is connected to the controller connecting terminal 8A or 8B through a dedicated cable 13.

Moreover, in this example, the following explanation deals with a case that communications with the system server 4 is executed through the cellular phone 12, however, it is also allowable that communications with the system server device 4 may be executed through communication terminal devices such as a personal computer device and so forth connectable to the internet 3. In this case, the personal computer device and the entertainment device 2 are connected through the PC card that is inserted into the above-described PC card slot.

Further, in this example, the cellular phone 12 is connected to the controller connecting terminal 8A or 8B through the dedicated cable 13, however, it is allowable that the cellular phone 12 is connected to the memory card entries 9A, 9B, and also allowable that, for example, connecting terminals such as a USB connecting terminal (Universal Serial Bus) or an IEEE 1394 connecting terminal (Institute of Electrical and Electronics Engineers) or so forth is provided at the entertainment device 2 to connect with the cellular phone 12 through these connecting terminals.

### Configuration of system server device

The system server device 4 has a virtual area as a pet ranch for characters (pets) who are released to pasture from respective users, and further the system server device 4 has data base 15 in which information concerning the pet such as character of each pet, genre with interest, personal data, a blood type, date of birth, an astrology and so forth, all of which are input by respective users, are stored therein.

Furthermore, in the case of this example, since each pet is considered as each user's own double, information such as the blood type, the date of birth, the astrology and so forth of the user of its pet is stored as "information concerning the pet" in the data base 15 (also it is allowable that the user forms information of pet's self appropriately to store in the data base 15).

### Operation of net communication system

### Formation of character (pet)

First, the user who uses this net communication system forms a pet which becomes one's own double. In this embodiment, this pet is formed on the basis of sentence of an electronic mail written by the user.

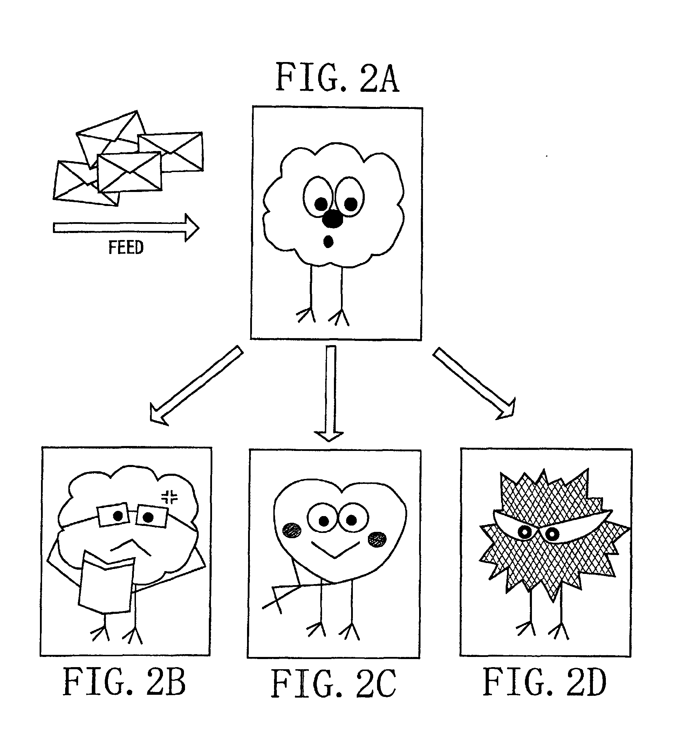

Specifically, when an optical disk 1 storing a net communication program corresponding to this net communication system is loaded, the entertainment device 2 operates on the basis of the net communication program, firstly, the entertainment device 2 forms to draw a pet having, for example, a shape shown in FIG. 2A, then, provides the pet to display to the television receiver for monitoring via the above-described audio and video output terminal (AV multi output terminal) (also it is allowable that the pet may be provided to the cellular phone 12 of the user through the dedicated cable 13 to display on a display screen of the cellular phone 12).

The pet shown in FIG. 2A has a basic (initial) shape and, for example, character of its pet is normal such as good-natured and so forth, however, a shape and character of the basic pet are changed depending on contents of transmission mail, thus a pet having another shape and character is formed by giving the transmission mail of the user as feed to the pet (basic pet) as described later.

In this example, following explanation deals with a case that, as one example, a pet as one's own double of the user is formed on the basis of the electronic mail, however, it is also allowable that a pet may be formed on the basis of another information such as audio (music) information, image information and so forth.

Also, a shape and character and so forth of the pet are determined on the basis of the transmission mail, however, it is allowable that a shape and character and so forth of the pet may be determined on the basis of the received mail.

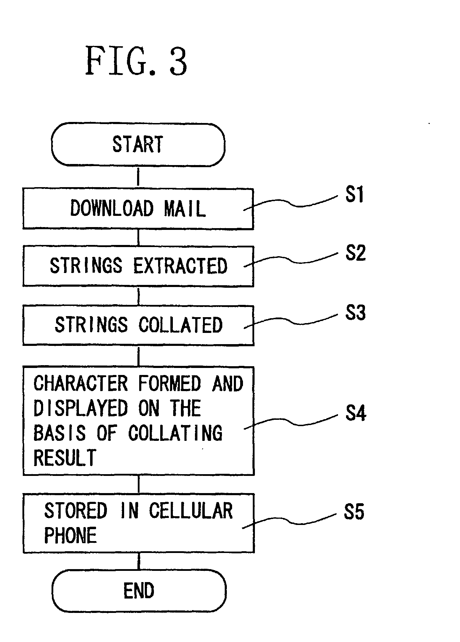

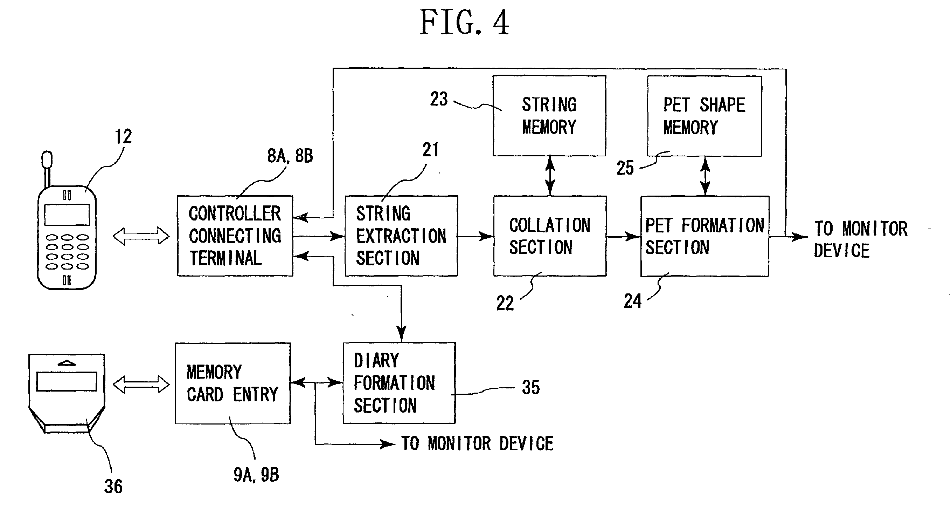

FIG. 3 is a flowchart showing a flow until a pet having a shape and character depending on contents of the transmission mail of the user is formed. FIG. 4 is a functional block diagram of the entertainment device 2 for forming the pet that has the shape and the character depending on the contents of the transmission mail of the user by operating based on the above-described net communication program.

Forming operation of the pet that has the shape and the character corresponding to the contents of the transmission mail of the user is explained using FIGS. 3 and 4. Firstly, in the flowchart of FIG. 3, operation is started when the user provides the transmission mails which are already transmitted, or which are not transmitted yet, corresponding to one mail or a plurality of mails, to the entertainment device 2. By this provision, operation of the entertainment 2 proceeds to step S1.

In step S1, a string extraction section 21 shown in FIG. 4 downloads the transmission mail provided from the user's cellular phone 12 via the controller connecting terminal 8Aor 8B. Thereafter, operation of the entertainment device 2 proceeds to step S2.

In step S2, the string extraction section 21 extracts predetermined strings from the downloaded transmission mail to provide the extracted respective strings to a collation section 22. By this operation, operation of the entertainment device 2 proceeds to step S3.

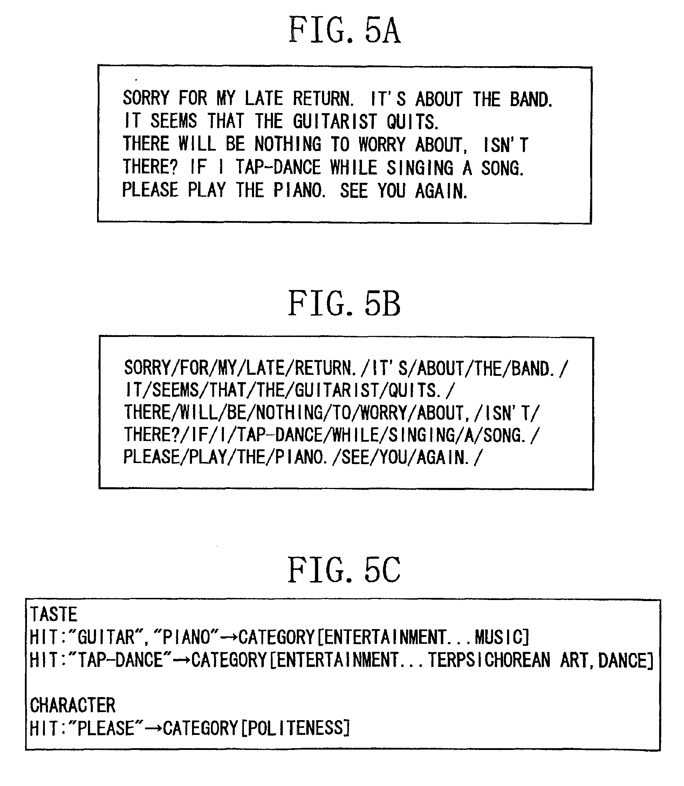

Specifically, for example, when the transmission mail downloaded by the string extraction section 21 is, as shown in FIG. 5A, "Sorry for my late return. It's about the band, it seems that the guitarist quits. There will be nothing to worry about, isn't there? If I tap-dance while singing a song. Please play the piano. See you again.", the string extraction section 21, in the above-described step S2, as shown in FIG. 5B, extracts the respective strings so as to divide the sentence into every respective strings such as "Sorry / for / my / late / return. / It's / about / the / band, / it / seems / that / the / guitarist / quits. / There /will / be / nothing / to / worry / about, / isn't / there? / If / I / tap-dance / while / singing / a / song. / Please / play /the / piano. / See / you / again.", to provide them to the collation section 22.

Next, in step S3, the collating section 22 executes collating processing (matching processing) between the respective strings provided from the string extraction section 21 and the respective strings stored in the string memory 23, then provides information which indicates collating result to the pet formation section 24. By this operation, operation of the entertainment device 2 proceeds to step S4.

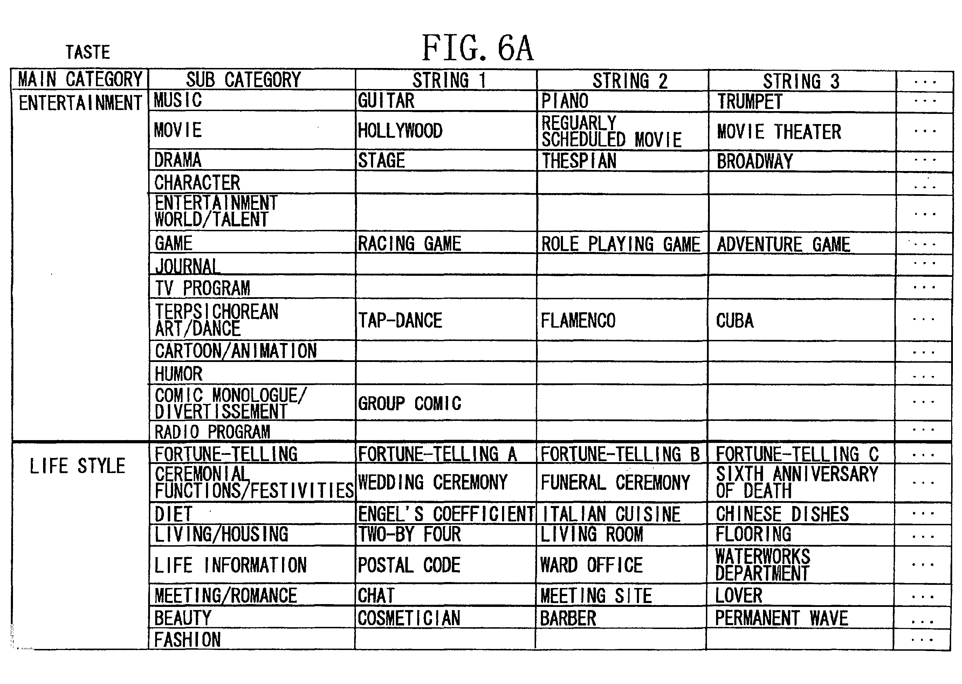

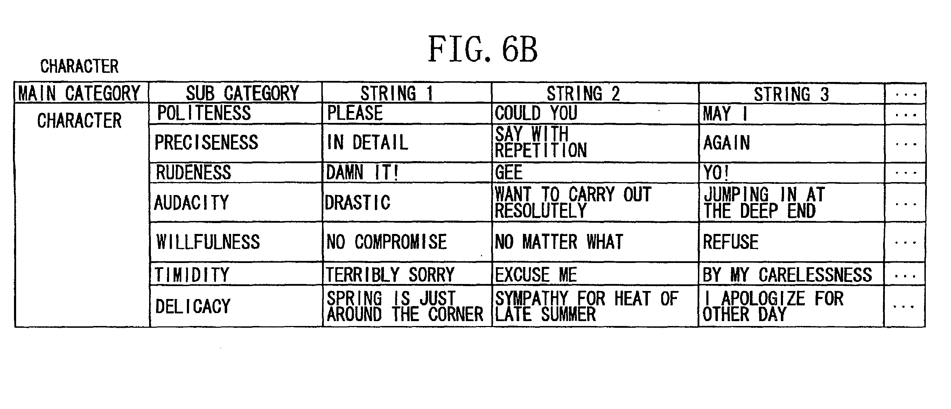

FIGS. 6A and 6B show one example of respective strings stored in the string memory 23. As is understood from FIGS. 6A and 6B, the string memory 23 stores respective strings so that string of "taste" (FIG. 6A), string of "character" (FIG. 6B) and so forth may be classified. Moreover, respective strings classified into "taste" and "character" are further classified into "main category" and "sub category" to be stored in the string memory 23.

In the case of this example, the respective strings classified into "taste" shown in FIG. 6A, are classified into main categories such as "entertainment", "life style", ... and so forth. Furthermore, in the main category of "entertainment", which is further classified into sub categories of "music", "movie", "drama", "character", ... "humor", "comic monologue/divertissement", "radio program" , ..., and so forth, also in the main category of "life style" , which is further classified into sub categories of "fortune-telling", "ceremonial functions/festivities", "diet", "living/housing", ..., "meeting/romance", "beauty", "fashion", ... and so forth.

For example, in the sub category of "music", a string of "guitar" is assigned as the first string (string 1), a string of "piano" is assigned as the second string (string 2), and a string of "trumpet" is assigned as the third string (string 3), also, in the sub category of "diet", a string of "Engel's coefficient" is assigned as the first string (string 1), a string of "Italian cuisine" is assigned as the second string (string 2), and a string of "Chinese dishes" is assigned as the third string (string 3), thus, the respective strings are stored in the string memory 23.

Similarly, respective strings classified by "character" shown in FIG. 6B, for example, are classified into sub categories such as "politeness", "preciseness", "rudeness", "audacity", ..., "timidity", "delicacy", ... and so forth.

Further, for example, a string of "please" is assigned as the first string (string 1) of the sub category of "politeness", strings of "could you" are assigned as the second string (string 2) thereof, strings of "May I" are assigned as the third string (string 3) thereof, also, strings of "no compromise" are assigned as the first string (string 1) of the sub category of "willfulness", strings of "no matter what" are assigned as the second string (string 2) thereof, a string of "refuse" is assigned as the third string (string 3) thereof, thus, the respective strings are stored in the string memory 23.

As described above, in step S3, collating processing is executed between respective strings stored in the string memory 23 and respective strings extracted by the string extraction section 21. The collating operation will be explained while taking sentences shown in FIG. 5B as an example. The strings of "guitar" and "piano" from among the strings of the sub category of "music" and also the strings of "tap-dance" from among the strings of the sub category of " Terpsichorean art/dance" within the classification of "taste" as shown in FIG. 5C, correspond (hit) with the strings stored in the string memory 23 shown in FIGS. 6A and 6B within respective strings of the sentences shown in FIG. 5B. Similarly, the string of "please" corresponds (hit) therewith from among the strings of the sub category of "politeness" within the classification of "character".

For that reason, in the case of this example, the user who transmits such transmission mail, can be determined as the user who likes music and/or dance and who has polite character. The collating section 22 provides information that indicates such collating result to the pet formation section 24.

Next, in step S4 of the flowchart shown in FIG. 3, the pet formation section 24 forms a pet having a shape and character based on information that indicates collating result from the collating section 22, then displays to control the pet on television receiver for monitoring (or preferably to display on the display screen of the cellular phone 12).

FIG. 2B to FIG. 2D show each one example of pet of shape that is changed from the basic shape shown in FIG. 2A depending on the contents of the transmission mail. For example, the pet of the shape in FIG. 2B is the one of the type which is so eager to learn, in that many strings which inspire image of study such as "learning", "mark of test", "mathematics", "foreign language" and so forth are included in the strings of the user's transmission mail. In such a case, the pet of studying type as shown in FIG. 2B is formed.

Further, the pet of the shape of FIG. 2C is the one of romance type, when many strings which inspire image of romance such as "date", "much-loved", "ring", "marriage" and so forth are included in the strings of the user's transmission mail, the pet of romance type as shown in FIG. 2C is formed.

Furthermore, the pet of the shape of FIG. 2D is the one of violence type, when many violent strings such as "give someone a blow", "give someone a kick" and so forth are included in the strings of the user's transmission mail, the pet of violence type as shown in FIG. 2D is formed.

Since the shapes of the pet shown in FIG. 2B to FIG. 2D including the pet shown in FIG. 2A are mere one example, shape of the pet is not limited to these shapes, so that it is noted that a shape of pet may be arbitrary shape depending on contents of an electronic mail. Merely, it will be preferable that, by seeing the pet, the shape inspires image of taste, character and so forth of the pet's user from the shape.

Next, the pet formation section 24 forms the pet on the basis of the user's transmission mail as above, then, in step S5 of the flowchart shown in FIG. 3, provides image information of the pet thus formed and the user's information to the cellular phone 12 via the dedicated cable 13 shown in FIG. 1. When the user uses the pet as the double of one's own for communication, the user stores the image information of the pet and the user's information in the cellular phone 12.

Hereby, forming operation of the pet in the entertainment device 2 is terminated, thus, it becomes possible to establish communications indirectly with another user via each other's pets stored in the cellular phone 12 as described below.

Here, the user's information is stored in the cellular phone 12 in connection with its information including contents determined on the basis of the user's transmission mail, however, for example, personal information such as street address, age, sexuality, electronic mail address, and so forth are difficult to be extracted as distinguished from the contents of electronic mail. For that reason, the entertainment device 2 allows users to execute addition and amendment to the user's information.

Specifically, when predetermined operation is performed using a controller 10, the user's information is displayed on the display screen of the television receiver. The user checks the displayed user's information, then, if there is need for amendment, the user operates the controller 10 to execute amendment, or, for example, if there is the electronic mail address, or sexuality or hope and/or message and so forth to another user, the user operates the controller 10 to input them. It is therefore possible to store the user's information capable of being introduced to another user in the cellular phone 12.

It is assumed that addition and amendment to the user's information are executed at the side of the entertainment device 2, however, also this can be executed at the side of the cellular phone 12. At this case, the user selects item on which addition and amendment is to be executed, by a cursor key of the cellular phone 12, then, inputs using ten key to which characters are assigned. Pet ranch

The user can separate the cellular phone 12 physically from the entertainment device 2 to carry the pet by storing the pet as the double of one's own in the cellular phone 12, thus establish communications indirectly with another user via each other's pets stored in the cellular phone 12.

When the user establishes communication with the user of another pet, this user connects the system server device 4 on the internet 3 with the cellular phone 12 via a communication base station 30 of the cellular phone 12 and the internet 3 shown in FIG. 1, and transmits the image information of the pet, the user' s information, message from the user and so forth stored in the cellular phone 12 to the system server device 4.

As the message from the user, it is possible to transmit desired message such as, for example, "please, search for friend whose taste corresponds with me", "please, send a mail from p.m.9:00 to p.m.11:00" and so forth.

The system server device 4 stores the image information of the pet, the user's information, and the message transmitted via the user's cellular phone 12 in the data base 15 individually. The system server device 4 recognizes messages of respective users and then executes matching processing of the use's information added to the pets of the respective users, which user's information is stored in the data base 15, to thereby execute information processing, for example, for exchanging user's information between fellow pets whose taste and character correspond with each other, and automatically to establish communications of respective fellowpets.

Since each one's pet and each information of respective users are transmitted to the system server device 4, the pets of respective users come together at the system server device 4, and, so to speak, open space (pet ranch) where fellow pets make acquaintance is formed in the system server device 4.

The user can pasture (register) the pet of one's own at the pet ranch by connecting the system server device 4 with the cellular phone 12 of one's own at favorable time.

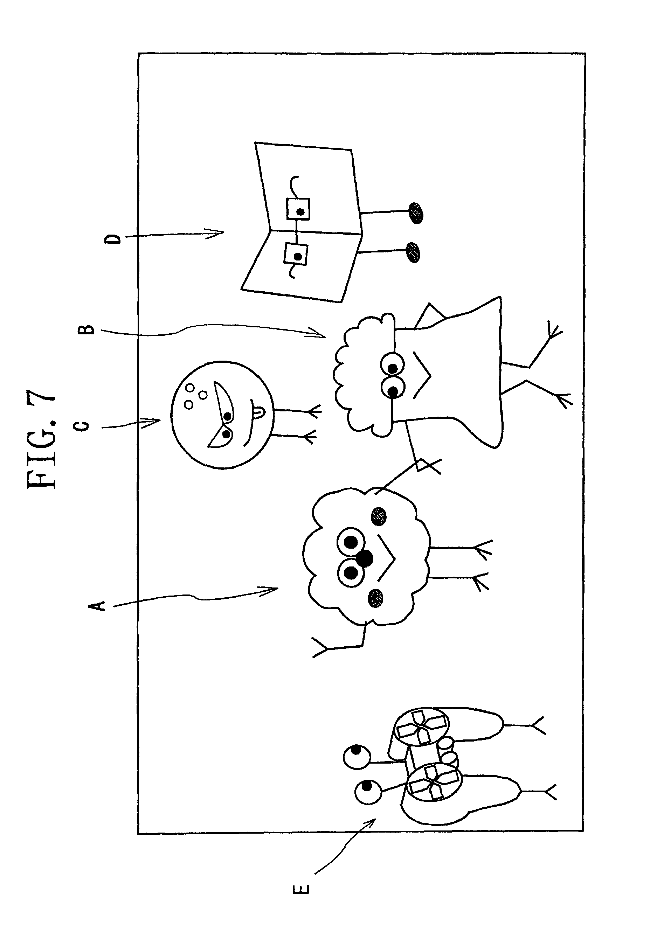

FIG. 7 is a virtually depicted view of appearance in which respective fellow pets establish communications in the pet ranch that is formed in the system server device 4. As shown in FIG. 7, the pets of respective users registered in the system server device 4 establish communications instead of the respective users by the above described matching processing of the system server device 4.

The pet A and the pet B shown in FIG. 7 indicate that they are the pets whose user has mild mannered and friendly character as is clear from their shapes. Further, the pet C has bowl-of-bowling imaged shape, and indicates that it is a pet whose user likes bowling and his or her character is a little prickly. Simultaneously, the pet D has news paper imaged shape, and indicates that it is a pet whose user has serious character and the user is knowledgeable about the trends of the world. Moreover, the pet E has the imaged shape of a controller of a video game unit, and indicates that it is a pet whose user has pleasant character and the user likes video game. Character and taste of any pet may be capable of being determined from its shape.

### Checking of state of pet

Next, thus the system server device 4 allows respective fellow pets registered in the data base 15 to establish communication, meanwhile, the user who registered one's own pet becomes curious about what state of the pet of one's own at present is. For that reason, in this net communication system, the user can check current state of the pet of one's own.

In the case of checking, the user establishes connection between the cellular phone 12 of one's own and the system server device 4, then designates the system server 4 to check current state of the pet of one's own. When this designation is performed, the system server device 4 forms an image and sentence information indicating current state of the designated user's pet (only image or only sentence information is allowable), then returns to the user's cellular phone 12.

Specifically, as sentence information indicating current state of the pet, sentence information such as "searching for friend" , "fighting with another pet", "talking with congenial friend", "since the pet has nothing to do, please return to the home (cellular phone 12 or entertainment device 2)" and so forth are sent to the user's cellular phone 12.

By this matter, the image indicating current state of the pet of one's own and above described sentence information are displayed on the display screen of the user's cellular phone 12, thus the user can recognize current state of the pet of one's own.

For example, if the user of the pet A shown in FIG. 7 designates to check current state of the pet of one' own, and then the image shown in FIG. 7 is sent to the cellular phone 12, the user can know that the pet A of one's own makes friend with the pet B of another user, thus the user will feel relieved by recognizing the state that communication exceeds preferably.

Character of each pet becomes one in which character of each user is reflected, therefore, each pet exists having individuality. For that reason, the all pets are not necessarily friendly character, so that pets who start a quarrel with each other may exist. In such a case, the user of each pet is needed to issue instructions for stopping the quarrel. Accordingly, it may be preferable that the user diligently checks current state of the pet after pasturing the pet of one's own.

Further, in cases where the sentence information of "since the pet has nothing to do, please return to the home" is sent a reply, at present, it indicates the state in which the pets of another users whose character and/or taste correspond with that of the pet of the user are not pastured.

In this case, even though the pet is pastured, it is impossible to establish communication with the pet of another user, therefore, the user transmits a message of, for example, "return home" to the system server device 4 by manipulating the cellular phone 12 of one's own.

The system server device 4, when receiving this message, reads out each information of this user's pet from the data base 15, then, sends a reply to the user's cellular phone 12. The system server device 4 removes each information of that pet stored in the data base 15.

Accordingly, the pet of the user comes back to one's own home (user's cellular phone 12 or entertainment device 2) from the pasturage (system server device 4). The user, when establishing communication again, pastures the own pet again on one's own appropriate time.

### Report of first contact

Next, when the system server device 4 executes matching processing of each information of respective pets registered in the data base 15 with the result that the system server device 4 has found a pet whose character and taste correspond with that of the pet or has found a pet who corresponds with the message from the user, the system server device 4 forms "first contact reporting mail" to transmit it to the user of respective pets as the mail from the respective pets.

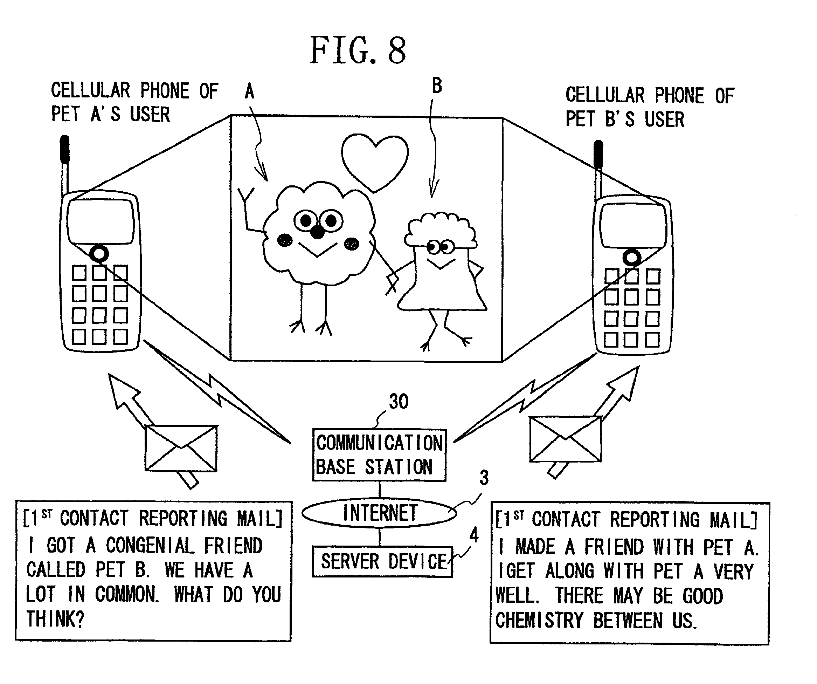

For example, as shown in FIG. 8, when the system server device 4 has found the pet B whose taste and character correspond with that of the pet A, the system server device 4 forms a first contact reporting mail that, for example, "I got a congenial friend called pet B. We have a lot in common. What do you think?", then transmits it to the cellular phone of the user of the pet A. Also, the system server device 4 forms a first contact reporting mail that "I made a friend with pet A. I get along with pet A very well. There may be good chemistry between us." and so forth, then transmits it to the cellular phone of the user of the pet B.

The user of the pet A knows existence of the pet B whose taste and character correspond with that of one's own, similarly, the user of the pet B knows existence of the pet Awhose taste and character correspond with that of one's own. Further, if both pets hope communication therebetween, each user establishes communication between respective fellow users via each other's pets on chat, quiz, game or so forth explained later, or, each user establishes communication between respective fellow users while teaching electronic mail address and telephone number mutually.

Respective users can specify time period for receiving the first contact reporting mail when registering the pet of one's own on the system server device 4, and the system server device 4 transmits the first contact reporting mail within the time period specified by the user. For that reason, this enables to prevent disadvantage that the first contact reporting mail is transmitted within time period when respective users do not intend to receive. Communications between fellow users via pets

Next, the user of each pet is capable of performing chat, quiz, game or so forth through the system server device 4.

### Chat

For example, explanation is made on the above-described example, in cases where the user of the pet A and the user of the pet B find interest each other on the first contact reporting mail and intend to establish communications each other, the user transmits information of the pet of one's own to the system server device 4, then specifies the pet as a partner to make instruction for chat.

The system server device 4, when being issued the instruction, establishes connection of telephone network to the user of the pet specified by the user, and adds string data transmitted via the cellular phone 12 of respective users to the image of the pet of a partner to transmit to the partner's cellular phone 12 in real time. For this means, so-called chat which is real time conversation while using letters is capable of being performed through the pets of respective users, thus it is possible to establish communications with each other.

In this chat, the user designates the mail address of one's own and items to be intended to memorize by the partner as "letter" to the system server device 4, to thereby enable the user to pass the "letter" to the partner.

The system server device 4, when finding designation of this letter, transmits the sentence of the letter to the cellular phone of the partner as the letter capable of being confirmed after completion of the chat (it is also allowable that the letter is can be confirmed during the chat).

The sentence of the letter that will be explained later at paragraph of "formation of diary" is displayed to be attached to the writing of the diary of respective user's pets, and the user who receives the letter confirms the diary and the contents of the letter from the partner.

### Quiz

Further, in this net communication system, respective fellow users can also enjoy quizzes. The user, when playing with quizzes, transmits the information of the own pet to the system server device 4 and carries out instruction of the effect of playing with quizzes to the system server device 4 while specifying the partner's pet.

The system server device 4, when this instruction being issued, establishes connection of the telephone network to a user of the pet specified from the user, followed by forming a quiz of genre in which respective users have an interest on the basis of, for example, the shape of the pet of respective users and respective user's information and so forth, and then, transmits quizzes to each user's cellular phone to set them (it is allowable that the quiz is one independently of genre in which respective users have an interest and independently of the taste of respective users.). The respective users vie in correct answer with each other by inputting answer of the quiz with string data and so forth while operating the cellular phone of one's own.

For this means, respective users can obtain topic of conversation for performing the chat and conversational opportunity with the partner, thus it is possible to establish easily each other's communications.

### Game

In this net communication system, respective fellow users can also enjoy a game. The user, when playing with game, transmits the information of the own pet to the system server device 4 and carries out instruction of the effect of playing with a game to the system server device 4 while specifying the partner's pet.

The system server device 4, when this instruction being issued, establishes connection of the telephone network to a user of the pet specified from the user, and performs communication control between respective users so that simple games such as, for example, "paper-rock-scissors", "word game", "poker" and so forth can be performed, to thereby allow respective users to establish each other's communications through the game.

### Acquisition of medal and accession of item

Next, in this net communication system, virtual "medal" is given to the user who answers correctly to the aforementioned quiz or who is the winner of the game. Namely, the system server device 4 executes increment to considerable number of information that indicates the number of the medal of the user, in every time the user answers correctly, or in every time the user wins out over the game. Thus the system server device 4 transmits information that indicates the number of the medal to respective users. For this means, the number of the medal of the user increases gradually in every time the user answers correctly to a quiz, or in every time the user wins out over the game.

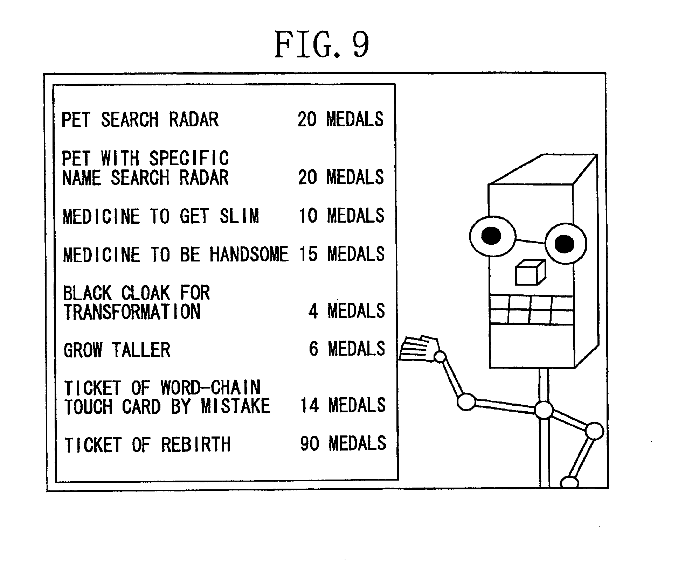

Next, the user can receive predetermined items (services), for example, as shown in FIG. 9, depending on the number of this medal.

Specifically, referring to exemplification of FIG. 9, the user, if accreting 20 medals, can receive an item of "pet search radar" capable of searching for the pet whose taste and/or character are the same as that of one's own, and/or the pet having a specific name from among the pets in the pet ranch. Further, the user, if accreting 10 medals, can receive an item of "medicine" by which personal appearance (shape) of the pet of one's own gets better.

The system server device 4, when receipt of these items is instructed from the user, executes decrement processing of the number of medals necessary for receipt of the items from the current number of medals of the user, and then transmits the information of the item to the user. The user transmits, when using the item, information of the effect that the user uses the item to the system server device 4 when that the pet is pastured and so forth.

Therefore, the system server device 4 executes information processing corresponding to the employed items that, for example, the pet whose taste and/or character and so forth corresponding with taste and/or character and so forth of the user is searched in high-speed, or the image of the pet is changed to better the appearance (shape).

### Formation of diary

Next, in the communication network system, the pet of respective users performs reporting of communication result of its day to the user using form of "diary".

When the user makes the pet one's own form diary, the user brings back the pet of one's own from the pasturage. The pet of each user brings back information of the number of medal acquisition, information of the game and/or the chat both of which are performed its day, and user's information of the pet who met the pet of another user, when the pet returns from the pasturage. For that reason, the user, as shown in FIG. 1, connects the entertainment device 2 with the cellular phone 12 of one's own mutually via the dedicated cable 13, and provides respective information of the pet of one's own as well as the information that the pet brings back to the entertainment device 2 from the cellular phone 12. These respective information are provided to a diary formation section 35 in the entertainment device 2 via the controller connecting terminals 8A, or 8B shown in FIG. 4.

The diary formation section 35 forms sentence information of diary on the basis of, for example, the time that the pet comes across another pet, a kind of game with which the pet and another pet played, key word of the conversation in the chat and so forth all of which are the above-described respective information from the cellular phone 12 (The diary may be picture-type. At this case, image information is added.), then provides to the television receiver.

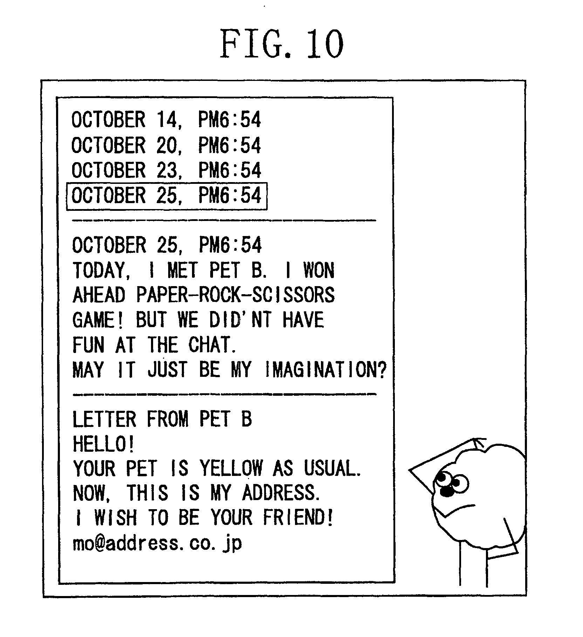

Specifically, FIG. 10 shows one example of display screen of the diary formed in the diary formation section 35, in this example, items of the diary are displayed such as "October 14, PM 6:54", "October 20, PM 6:54", "October 23, PM 6:54", and "October 25, PM 6:54". When the user selects a date to desire to see from among these items, the contents of the diary of selected date are displayed.

For example, when the item of the date of "October 25, PM 6:54" is selected, and the diary is displayed such as:
"October 25, PM 6:54
Today, I met pet B.
I won ahead paper-rock-scissors game!
But we didn't have fun at the chat.
May it just be my imagination?"

For this reason, the user can be aware of communication result of the pet of one's own at that day.

Further, when a letter handed over from the partner due to the aforementioned chat exists, the diary formation section 35 attaches the sentence of the letter and/or image and so forth to the diary to display it. Specifically, the writing under the sentences of the diary of FIG. 10 is the "letter". As shown in FIG. 10, for example, the sentences of the letter are attached to the diary to be displayed such as:
"letter from pet B
Hello!
Your pet is yellow as usual.
Now, this is my address. I wish to be your friend! mo@address.co.jp".

Such diary and/or letter can be stored in memory card 36 shown in FIG. 4, if the user operates the controller 10 to specify writing into this memory card 36, the diary formation section 35 executes writing control of the sentence information (and/or image information) of the diary and the sentence information (and/or image information) of the letter, to the memory card 36 which is inserted into the memory card entry 9A or 9B. It allows the user to reproduce the diary and/or letter stored in the memory card 36 to read again at a future date.

Furthermore, in cases where the telephone number and/or mail address of the user of the partner's pet are described in the diary or the letter, they can be transferred to the cellular phone 12 to be stored therein.

In this case, when transfer of the telephone number and/or the mail address is instructed through operation of the controller 10 by user, the diary formation section 35 extracts the sentence information such as the telephone number and/or the mail address from among the diary and the letter, then transfers it to the cellular phone 12 via the controller connecting terminal 8A or 8B. When this transfer is performed, the cellular phone 12 stores to control the telephone number and/or the mail address in a telephone directory or address directory within the telephone. Therefore, the user can store automatically the telephone number and/or the mail address of the user of the pet who is one befriended with the pet of one's own in the cellular phone 12.

### Effect of embodiment

As is clear from the above explanation, the net communication system of this embodiment forms a pet having shape and/or character depending on contents of the electronic mail which is transmitted and received via the cellular phone 12 due to the entertainment device 2, and transmits the pet to the system server device 4 on the internet 3.

The system server device 4 executes each matching processing of information of respective pets transmitted from respective users, then transmits the reporting mail (first contact reporting mail) for making an introduction of the user of a partner's pet to respective users of the pet while performing a search for fellow pets whose taste and/or character correspond with each other. For this means, the user can find out another user whose taste and/or character and so forth correspond with those of one' own automatically and casually via the pet.

Further, fellow users who receive first contact reporting mail, since then, can establish communications while performing chat and/or game and so forth via each other's pets. For that reason, the users can deepen amicability while establishing communications securely to unacquainted user via the pet.

In such net communication system, since the system server device 4 makes automatically an introduction of the user of the pet whose taste and/ character correspond with those of one's own by pasturing the pet to be the double of one's own at the pet ranch formed within the system server device 4 when one feels doing so, the user can establish communications while making a search for another user without necessity of bureaucracy. For that reason, the net communication system is very convenient and useful system for busy modern people.

Moreover, in the explanation of the aforementioned embodiment, the entertainment device 2 is used to form the pet and so forth, as well as the pet formed by use of the entertainment device 2 is transmitted to the system server device 4 on the internet via the cellular phone 12, however, it is possible to make the net communication system utilizable using only the cellular phone 12 without the entertainment device 2, by downloading or printing the program of the net communication system stored in the optical disk 1 into a memory in the cellular phone 12.

Further, it is assumed that the shape and/or character and so forth are changed on the basis of contents of string of the electronic mail and so forth, however, it is allowable that, for example, a wallpaper of a monitor device may be changed on the basis of such as, the sentence information of the electronic mail and so forth, user's information such as audio information, image information and so forth, as well as, some kind of effect is influenced on virtual world of the video game, except that the contents of the electronic mail are reflected to the pet.

The above embodiment shows one example of the present invention. Therefore, it is of course possible to carry out various modifications to the present invention according to designs within a range not deviating from the technical idea of the present invention, without limiting to the examples in the above embodiment.

This application is related to Japanese Patent Application No. 2001-20461 filed on January 29, 2001, based on which this application claims priority under the Paris Convention and the contents of which are incorporated herein by reference.

Various respective aspects and features of the invention are defined in the appended claims. Features from the dependent claims may be combined with features of the independent claims as appropriate and not merely as explicitly set out in the claims.

## Claims

1. An information processing equipment comprising:
information extracting means for extracting user's information from input information, the user's information including information or a string based on which at least character or taste can be inferred from; and
information processing means for forming an object corresponding to the user's information extracted by the information extracting means,
wherein information processing means forms the object so as to have a shape representing at least character or taste which is inferred from the information or the string extracted by the information extracting means.

2. A method of information processing comprising:
a step of extracting user's information from input information, the user's information including information or a string based on which at least character or taste can be inferred from; and
a step of forming an object corresponding to the user's information extracted in the extracting step,
wherein the forming step further comprises a step of forming the object so as to have a shape representing at least the character or the taste which is inferred from the information or the string extracted in the extracting step.

3. The method of information processing according to claim 2, further comprising:
a step of forming at least writing in diary style based on the input sentence information.

4. A computer-readable recording medium having recorded therein an information processing program to be executed on a computer, the information processing program comprising the steps of:
extracting user's information from input information, the user's information including information or a string based on which at least character or taste can be inferred from; and
forming an object corresponding to the user's information extracted in the extracting step,
wherein the forming step further comprises a step of forming the object so as to have a shape representing at least the character or the taste which is inferred from the information or the string extracted in the extracting step.

5. An information processing program to be executed on a computer, comprising the steps of:
extracting user's information from input information, the user's information including a string based on which at least character or taste can be inferred from; and
forming an object corresponding to the user's information extracted in the extracting step,
wherein the forming step further comprises a step of forming the object so as to have a shape representing at least the character or the taste which is inferred from the string extracted in the extracting step.

6. An information processing equipment, comprising:
storing means for storing therein a plurality of user's objects which are respectively provided with user's information added;
detecting means for detecting objects whose information of the users are identical with each other or close to each other by executing collating processing of the user's information of respective objects stored in the storing means; and
transmitting means for transmitting information concerning collating result to respective users of the object detected by the detecting means.

7. A method of information processing, comprising:
a steps of storing a plurality of user's objects which are respectively provided with user's information added;
a step of detecting objects whose information of the users are identical with each other or close to each other by executing collating processing of the user's information of respective objects stored in the storing step; and
a step of transmitting information concerning collating result to respective users of the object detected in the detecting step.

8. The method of information processing according to claim 7, wherein the user's information is formed from information indicating at least character or taste.

9. The method of information processing according to claim 7 or 8, wherein
the user's information is formed from sentence information, and
the collating processing comprises a step of extracting strings of the sentence information to respectively execute collating processing of the user's information of respective objects based on the strings thus extracted.

10. The method of information processing according to claim 7, 8 or 9, further comprising:
a step of executing communication processing which makes it possible to perform at least chat between the respective users by connecting communication lines between the respective users to which the collating result is transmitted.

11. A computer-readable recording medium having recorded therein an information processing program to be executed on a computer, the information processing program comprising:
a step of storing a plurality of user's objects which are respectively provided with user's information added;
a step of detecting objects whose information of the users are identical with each other or close to each other by executing collating processing of the user's information of the respective objects stored in the storing step; and
a step of transmitting information concerning collating result to respective users of the object detected in the detecting step.

12. An information processing program to be executed on a computer, comprising:
a step of storing a plurality of user's objects which are respectively provided with user's information added;
a step of detecting objects whose information of the users are identical with each other or close to each other by executing collating processing of the user's information of the respective objects stored in the storing step; and
a step of transmitting information concerning collating result to each user of the object detected in the detecting step.

13. A network communication system comprising:
a plurality of user's terminal devices which are provided with information extracting means for extracting user's information from input information, object forming means of forming an object corresponding to the user's information extracted by the information extracting means, and communicating means, which is connected with predetermined network, for adding the user's information to the formed object and transmitting the object to which the user's information is added via the network; and
an information processing equipment which is provided with storing means for storing the object transmitted via the predetermined network by the communicating means of the terminal devices and the user's information added to the objects, detecting means for detecting the object whose information of the users are identical with each other or close to each other by executing collating processing of the user's information of each object stored in the storing means, and transmitting means for transmitting the information concerning collating result via the predetermined network to the terminal device of respective users of the object detected by the detecting means.

14. The network communication system according to claim 13, wherein the user's information is formed from information indicating at least character or taste of each user.

15. The net communication system according to claim 13 or 14,
wherein
the user's information input to the user's terminal device is formed from sentence information,
the information extracting means extracts strings indicating at least character or taste of the user from the sentence information, and
the object forming means forms objects corresponding to at least character or taste of the user based on the strings extracted by the information extracting means.

16. The net communication system according to claim 15, wherein the sentence information input to the user's terminal device is formed from sentence information of electronic mails of respective users.

17. The net communication system according to claim 13, 14, 15 or 16, further comprising:
communication control means for making it possible to perform at least chat between the respective users by connecting communication lines between the respective users to which the collating result is transmitted.

18. A method of net communication comprising:
in a terminal device,
a step of extracting information based on which at least character or taste of the user can be inferred from input user's information;
a step of forming objects corresponding to the information thus extracted; and
a step of adding the user's information to the object and transmitting the object to which the user's information is added via predetermined network, and
in an information processing equipment connected to the net communication,
a step of executing collating processing between respective user's information of respective objects transmitted from the respective terminal devices via predetermined network;
a step of detecting objects whose information of the users are identical with each other or close to each other; and
a step of transmitting information concerning collating result to the terminal device of respective users of the object thus detected via the predetermined network.

19. A computer-readable recording medium having recorded therein a net communication program to be executed on a computer, the net communication program comprising:
an information processing program at terminal device side to be executed on the terminal device, the information processing program at the terminal device side, including:
a step of extracting user's information from input information;
a step of forming an object corresponding to the user's information extracted in the extracting step; and
a step of adding the user's information to the formed object and transmitting the object to which the user's information is added via predetermined network, and
an information processing program at information processing equipment side to be executed on the information processing equipment connected to the network, the information processing program at the information processing equipment, including:
a step of detecting objects whose information of the users are identical with each other or close to each other by executing collating processing of the objects transmitted from the each terminal device via the predetermined network and the user's information added to the objects; and
a step of transmitting information concerning collating result via the predetermined network to the terminal devices of respective users of the objects detected in the detecting step.
